(19) **Europäisches Patentamt**
**European Patent Office**
**Office européen des brevets**

(11) **EP 2 056 245 B1**

(12) **EUROPEAN PATENT SPECIFICATION**

(45) Date of publication and mention
of the grant of the patent:
**21.12.2016 Bulletin 2016/51**

(51) Int Cl.:
***G06Q 20/00*** *(2012.01)*

(21) Application number: **07118979.9**

(22) Date of filing: **22.10.2007**

(54) **Electronic currency, method for handling such a currency and electronic currency handling system**

Elektronische Währung, Verfahren zum Umgang mit dieser Währung und System zum Umgang mit elektronischer Währung

Monnaie électronique, procédé de manipulation de monnaie et système de manipulation de monnaie électronique

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**06.05.2009 Bulletin 2009/19**

(73) Proprietor: **Cashbutler AB**
**102 47 Stockholm (SE)**

(72) Inventors:
• **Lindqvist, Eddie**
**181 31 Lidingö (SE)**
• **Lindqvist, Jan**
**181 35 Lidingö (SE)**
• **Bengtsson, Jerker**
**183 78 Täby (SE)**
• **Weidenberg, Johan**
**183 52 Täby (SE)**
• **Falk, Lars**
**122 40 Enskede (SE)**

(74) Representative: **Awapatent AB**
**P.O. Box 45086**
**104 30 Stockholm (SE)**

(56) References cited:
**EP-A- 0 784 282       EP-A- 0 798 672**
**EP-A- 1 072 995       US-A1- 2002 038 288**
**US-B1- 6 341 273**

Remarks:
The file contains technical information submitted after the application was filed and not included in this specification

EP 2 056 245 B1

**Description**

**Field of the invention**

The present invention concerns a system for handling of electronic payments, a user device for use in such a system including a cash handling unit, a so called CashButler, a method for handling electronic payments, an electronic currency, so called Dynamic Checks, a logic unit for executing operations associated with the handling of the electronic currency for use in electronic payments, which logic unit can be implemented in the cash handling unit, and software for executing operations in the cash handling unit and user device.

**Background of the invention**

Electronic payment transactions have become increasingly important and tremendous efforts are constantly placed into the development of suitable systems for carrying out such transactions.

One such system is described in WO 98/44429 which allows transactions between users over a network. In this system, electronic coins are used that each has a specific value, for example, $1 or $5 and a serial number. At the execution of a transaction, i.e. when one or several coins are transferred from one user to another, the value and serial number are also transferred in connecting with the electrical coin or coins. Each transaction must be performed via a transaction device. This system is thus impaired with the drawback that a transaction device must be used in each transaction as an intermediary device, for example, a transaction between two persons to settle a debt.

Furthermore, WO 02/23497 describes a system for electronic payment transactions over the Internet in which a virtual currency is used. A user may withdraw currency in three different ways:

i) By buying (e.g. in a retail store) a card containing a number associated with one or more electronic notes corresponding to a specific amount of currency. Thereafter, by inputting the numbers via a terminal (e.g. a computer work station) connected to the Internet, the corresponding amount of currency is transferred to an account of the user.

ii) By withdrawing a specific amount of currency from an automated teller machine (ATM), the user receives a note containing a number associated with one ore more electronic notes corresponding to a specific amount of currency. Thereafter, by inputting the numbers via a terminal (e.g. a computer work station) connected to the Internet, the corresponding amount of currency is transferred to an account of the user.

iii) By withdrawing a specific amount of currency from a terminal (e.g. a computer work station) connected to the Internet, the user receives a note containing a number associated with one ore more electronic notes corresponding to a specific amount of currency. Thereafter, by inputting the numbers via a terminal (e.g. a computer work station) connected to the Internet, the corresponding amount of currency is transferred to an account of the user.

This currency can then be used for transactions over Internet. At each transaction between a buyer and a seller, a check is performed at the issuing server (i.e. a server at the entity or connected to the entity that issued the currency used in the specific transaction) by the seller whether the electronic note used in the transaction is authentic or not. The withdrawal of currency is rather cumbersome in this system in that a code corresponding to a specific amount of currency first has to be downloaded via internet or bought and received physically in a store before the currency actually can be withdrawn or transferred to the account of the user.

Moreover, in EP 1 727 102, a system for handling electronic transactions between users via a network is described. The currency used in the system is in form of data packets wherein each contains information about:

- the value;
- the identity;
- authentication information, suitable to verify that the data packet has been generated by a specific Currency Issuing Authority (CIA).

A user stores his or her amount of currency, i.e. data packets, in a data packet storing area in a data storage medium, which may be a smart-card device or a floppy disk. The user must provide access to the data packet storing area for a so called CIA trusted server. At the execution of a transaction, the CIA trusted server may either erase the transferred amount (i.e. the data packets corresponding to the amount used in the transaction) or mark it as used. In each transaction, a verification that the data packets used in the transaction not has been used in an earlier transaction. The user thus has to provide access for the external server, which may be questionable with regards to personal integrity and it may also arise questions regarding security.

Accordingly, each of these prior art systems are impaired with drawbacks and there is thus a need of an improved system and method for handling electronic transactions.

EP 0 784 282 A2 discloses a monetary system using electronic media to exchange economic value. According to EP 0 784 282 A2 the monetary system has electronic money that is interchangeable with conventional paper money comprising issuing banks or financial institutions that are coupled to a money generator device for generating and issuing to subscribing customers electronic currency backed by demand deposits electronic credit authorizations; correspondent banks that accept and distribute the electronic money; a plurality of transaction devices that are used by subscribers for storing electronic money, for performing money transactions with the online systems of the participating banks or for exchanging electronic money with other like transaction devices; automated teller devices, associated with the issuing and correspondent banks, for process handling and interfacing the transaction devices to the issuing and correspondent banks, and for interfacing between the issuing and correspondent banks themselves; and a clearing bank for balancing the electronic money accounts of the different issuing banks.

## Summary of the invention

Thus, an object of the present invention is to provide an improved system, methods, user device, logic module, and software for handling electronic transactions.

Another object of the present invention is to provide a system, methods, user device, logic module, and software for handling electronic transactions with an improved performance with regard to system load.

A further object of the present invention is to provide a system, methods, user device, logic module, and software for increasing consumer security in electronic transactions.

Yet another object of the present invention is to provide a system, methods, user device, logic module, and software to enable consumer anonymity and privacy in electronic payments.

Still another object of the present invention is to provide an improved system, methods, user device, logic module, and software for handling electronic transactions that minimizes the amount of data stored within the system.

These and other objects of the present invention are achieved by a system and methods as claimed in claims 1, 2 and 3, which claims 1, 2 and 3 define the present invention.

As realized by the person skilled in the art, steps of the methods of the present invention, as well as preferred embodiment thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressly understood that the drawings are for the purpose of illustration and description and is not intended as a definition of the limits of the invention. These and other objects attained, and advantages offered, by the present invention will become more fully apparent as the description that now follows is read in conjunction with the accompanying drawings.

## Brief description of the drawings

Further features of the invention, its nature and various advantages will be made apparent from the accompanying drawings and the following detailed description of the invention, in which reference will be made to the accompanying drawings, of which:

Fig. 1 schematically shows an embodiment of a system environment in which the present invention can be implemented.

Fig. 2 schematically shows an exemplary system environment according to the present invention and an exemplary flow of Dynamic Checks within the system.

Fig. 3 schematically shows a flow diagram over the Dynamic Check flow and logic for purchase applications.

Fig. 4 schematically shows a logic flow at a purchase of Dynamic Checks according to the present invention.

Fig. 5 schematically shows CashMeSsage handling according to the present invention.

Fig. 6 schematically shows Dynamic Check transfer; hand shaking procedure according to the present invention.

## Detailed description of the invention

To begin with, an overall and general description of the present invention will be given. The present invention concerns a system for handling of electronic payments, a user device for use in such a system including a cash handling unit, a so called CashButler, a method for handling electronic payments, an electronic currency, so called Dynamic Checks, a logic unit for executing operations associated with the handling of the electronic currency for use in electronic payments, which logic unit can be implemented in the cash handling unit, and software for executing operations in the cash handling unit and user device.

A Dynamic Check is represented by a structured variable record, containing a unique dynamic serial number. A Dynamic Check can theoretically represent any value from a very big value down to a smallest value representing the smallest unit of a currency, e.g. 0,5 SEK.

The dynamic serial numbers always follow the Dynamic Checks in every transaction but are preferably not displayed in any user device handling the Dynamic Checks. A transfer may consist of one or more Dynamic Checks where each may represent a different value. The sum of the values of all Dynamic Checks corresponds to the desired amount of value being transferred.

The Dynamic Checks are issued by an Issuing and Clearing Entity. The Issuing and Clearing Entity has two main tasks. The first is to issue the Dynamic Checks and debit the buyer for the Dynamic Checks with exactly the same amount of money as the issued Dynamic Check represents. The second task is to clear the Dynamic Checks and credit the acceptor. The Dynamic Checks are a form of prepaid means of payment.

The dynamic serial number makes a Dynamic Check unique. According to embodiments, the dynamic serial number consists of two parts, the "SNBase" and the "SNOffset". An Issuing and Clearing Entity has the freedom of choosing its own standard for the Base number. The offset always represents the number of daughter checks that can be derived from the mother check (minus one). A Dynamic Check having a value greater than the smallest unit can be divided into Dynamic checks with the desired value (less than the mother check). Each Dynamic check may subsequently be divided into new Dynamic checks until the value is equal to the smallest unit of the currency. Each new time a Check is derived, a new base address and offset are calculated. If divided to its smallest component the Dynamic Check will have an offset of 0 (zero).

## Definition of the Dynamic Check

Dynamic Checks are stored and transferred in structured variable records. The structured data type for Dynamic Checks according to one embodiment of the present invention is defined below (Dynamic CheckType):

- SNCurrencyCode as Long Integer
- CurrencyString as String
- IssuingID as Integer
- SNBase as String
- SNOffset as Long Integer
- Value as Float
- Unit as Integer
- Fraud as Boolean

### SNCurrencyCode

The currency code is a unique number of an Integer type; defining which currency the Dynamic Check represents e.g. USD, SEK, EURO etc. The currency code may represent a real currency or dedicated means of payment such as food coupons, vouchers, tickets etc.

### CurrencyString property

The Currency code has a corresponding string value following the code. This is to avoid having to update the carrier, i.e. the user device, every time a new currency is being used. The currency string provides the currency code in open string form such as "SEK", "NOK" or "USD".

### IssuerID

The Issuer ID is a unique number telling which institute e.g. bank or clearing entity that issued the Dynamic Check.

### SNBase property

The base part is a common number or code for each new issued Dynamic Check, generated according to the Issuing entity procedures, such as secret keys.

**SNOffset property**

The SNOffset defines the number of issued units of a certain currency (minus 1). Hence the Offset part defines how many daughter checks that can be derived from the mother check.

**Value property**

The Value defines the actual value of a certain Currency the Dynamic Check represents.

**Unit property**

The unit represents the smallest transferable unit of a currency. Normally this corresponds to the smallest available physical money or coin of the currency. This parameter does not need to be transferred. It is calculated with the formula:

$$Unit = (SNOffset+1)/Value$$

The result corresponds to the inverse of the smallest unit.

**Fraud**

This bit tells if the Dynamic Check has at any time been suspected to be false. The "Fraud" bit can only be set or reset by the issuing house e.g. when the Dynamic Checks are sent to the issuing entity for verification. When set it tells a purchase device, which was the one sending the request, that the Dynamic Check is suspected to be false and hence not valid for payment.
The Dynamic Check will be sent back to the paying CashButler with the bit set. The CashButler owner will then have to contact the Issuing house or someone working on the owners behalf, to settle the issue.

**CashButler logic**

The CashButler is an integrated module residing in a host device. A CashButler host device is any device certified for carrying and handling Dynamic Checks. Typical CashButler host devices includes:

- A mobile phone
- A personal digital assistant
- An MP3 device
- USB memory
- A laptop or personal workstation
- A purchase device in a retail store

It is always the CashButler host device that initiates all actions or CashButler Procedures. The reason for initiation of CashButler procedures could be:

- Request from a purchase device to receive Dynamic Checks for payment
- Request from user to send a Cash MeSsage
- Request from a user or a purchase device to clear Dynamic Checks i.e. send them to the issuing entity in order to credit the users account
- Request from user to view balance of the Dynamic Checks

In accordance with embodiments of the present invention, the actions that the CashButler host device performs on the CashButler will be limited to only a few regardless of the purpose of the actions. These actions include:

- Receive Dynamic Checks
- Transfer Dynamic Checks
- Request Dynamic Checks
- Balance request

- Error message

The purpose of these procedures is to ensure that there are at all times only one copy of each Dynamic Check and that no other information than value and currency are displayed to a user or unauthorized device participant.

## CashButler (logic unit) procedures

The operations used by the CashButler host device are executed and filtered by the CashButler logic unit which is the module handling Dynamic Checks database. There are preferably two types of operations possible on Dynamic Checks i.e. *transfer* procedures where Dynamic Checks are transferred to or from a CashButler and browsing functions where the values of the different Dynamic Checks stored in the CashButler are aggregated by its currency type and sent to the host device for display.

In order to perform a transfer operation, the CashButler host device must be connected to another "approved" CashButler Device such as a purchase device at a retail store or the mobile telephone operator in case CashButler is hosted by a mobile telephone. The authorization is done by Security Application Module or a SAM module. The SAM module uses established security methods in order to identify the connected device and is not part of this application.

## Hand shaking

These are basic hand shaking procedures that preferably have to be implemented as a minimum when transferring Dynamic Checks from one device to another. This procedure is used by the "Receive Dynamic Checks" and "Transfer Dynamic Checks" procedures. These hand shaking routines do not replace normal data communication flow control and hand shaking procedures. The purpose is for the communicating CashButler's to agree on who is responsible for the exchanged Dynamic Checks at each moment. The primary objective is to avoid that the Dynamic Checks exists in more than one copy. Therefore it is not allowed for the CashButler host device, the CashButler itself or anyone else participating in the transactions, to keep any records or logs including other information from the Dynamic Checks than the currency code and value. The only instances that may, and in fact must, keep records over the existing issued Dynamic Checks are the Issuing and Clearing Entities. Hence if the CashButler host device is a purchase device, the CashButler host device is allowed to request Dynamic Checks for transfer to an Issuing Entity for authentication. In this case the Dynamic Checks will not be deleted from the CashButler i.e. the hand shaking routine is not used fully.

With this procedure it is highly unlike that the Dynamic Checks will exist in more than one copy except during the period before the time out has expired and DCR or DCRACk has not been received properly.

## Receive Dynamic Checks (transfer)

This operation receives a vector consisting of one or more Dynamic Check records when the CashButler host device receives new Dynamic Checks. The CashButler always accepts incoming Dynamic Checks provided SAM has authorized the sending device and decrypted the data flow without errors. The hand shaking procedure must also have been done without errors. This operation is typically used when the user wants to "charge" CashButler by downloading money from the user's issuing institute or when the CashButler receives Dynamic Checks from another CashButler device e.g. via a Cash MeSsage.

## Transfer Dynamic Checks from device (transfer type)

This function is a positive response on a request from the CashButler host device sending a "Request Dynamic Checks". The request contains requested currency code and value.

The function scans the database for Dynamic Checks of the requested currency code and calculates the summed value property of the found Dynamic Checks. If the total value of the found Dynamic Checks is greater than or equal to the requested amount, it assemblies a vector containing Dynamic Check records where the sum of the records "value" property equals the requested amount of money. If however, the sum of the value of the existing Dynamic Checks is lower than the requested amount, it refuses the transaction and signals the host device "value not available".

When aggregating, the vector of the logic unit of the cash handling unit, i.e. CashButler, first selects the smallest remaining Dynamic Checks. This is to keep the number of Dynamic Checks in the device as small as possible. The logic unit adds Dynamic Checks until remaining value is less than or equal to a remaining Dynamic Check. Then in order to make up an exact amount, a new Dynamic check equal to the difference between requested value minus aggregated Dynamic Checks.

For security reasons, the host may require the user to accept the transfer by entering a pin code before the transfer is accepted.

**Request Dynamic Checks (transfer type)**

A transfer of Dynamic Checks from a CashButler is preferably initiated by a request. In accordance with embodiments of the present invention, the request comes from the CashButler host. The request contains requested Currency Code and value.

Even though the request itself comes from the Host device, the initiative may come from another source such as:

- A person wanting to send a Cash Message to a friend or as payment to a restaurant or retailer.

- A Purchase Device which through a physical interface in the Host device requests Dynamic Checks as payment for products or services.

**Send error message to host device**

Used when The CashButler logic has failed to perform an operation or has not received consistent or correct data or hand shaking status signals.

**Balance request**

Used when the CashButler host device needs to check content of the CashButler data base. Only the balance and currency code of the requested currency (currencies) are sent to the CashButler host device.

**DeFraud Dynamic Checks**

A CashButler may contain Dynamic Checks with the fraud bit set i.e. as a result of a negative "Authenticate Dynamic Checks" procedure performed by a Purchase device. These Dynamic Checks will be ignored by the CashButler in all attempts to transfer Dynamic Checks. Therefore these Dynamic Checks will be useless to the user and just consume memory capacity. The "DeFraud" routine can be initiated to empty the CashButler from existing Fraud marked Dynamic Checks.

In a "DeFraud" procedure, all "Fraud" marked Dynamic Checks will be gathered and send to an issuing house. The issuing house will select the Dynamic Checks marked with its issuing house code and send the other to the appropriate issuing houses for further process. Each Issuing House receiving Fraud marked Dynamic Checks will store these Dynamic Checks for investigation and later settlement with the user.

In a "DeFraud" transaction the Hand Shaking routines are applicable since, just like other Dynamic Checks, they may exist only in one copy.

**CashButler *host device procedures***

**Clear Dynamic Checks**

This procedure is used when the user or Purchase Device system wants to clear its Dynamic Checks, i.e. get credited for the Dynamic Checks. This is a function performed by the CashButler Host device. Towards the CashButler it is sends a normal "Request Dynamic Checks". The Dynamic Checks provided by the CashButler are sent to the issuing house or houses defined in the provided Dynamic Checks, together with information about the account to credit.

**Download Dynamic Checks**

This procedure is executed by the CashButler Host device in order to load the CashButler with newly purchased Dynamic Checks. It sends a request to an issuing house to purchase and download Dynamic Checks according to specified value and currency. The users account number is either provided in the request or more likely stored in the user profile at the issuing house e.g. the mobile operator serving a certain mobile phone.

**Authenticate Dynamic Checks**

This procedure is used to check the authenticity of Dynamic Checks. The Dynamic Checks selected daughter check's are sent to the issuing house with a request to check the authenticity. Hence it can only be executed when the receiving participant is the issuing house that issued the Dynamic Check(s). This procedure is different from the "Transfer Dynamic Checks" procedure in the sense that it does not delete the Dynamic Checks after they have been sent away for verification.

The procedure can only be executed if the CashButler host device is a certified Purchase Device. The purpose of the procedure is to verify in a fast way whether or not the Purchase device should accept the provided Dynamic Checks. This procedure acts only on Dynamic Checks located in the CashButlers "Pipe", which is a buffer containing Dynamic Checks intermediately before the Purchase device has decided whether or not to keep the Dynamic Checks.

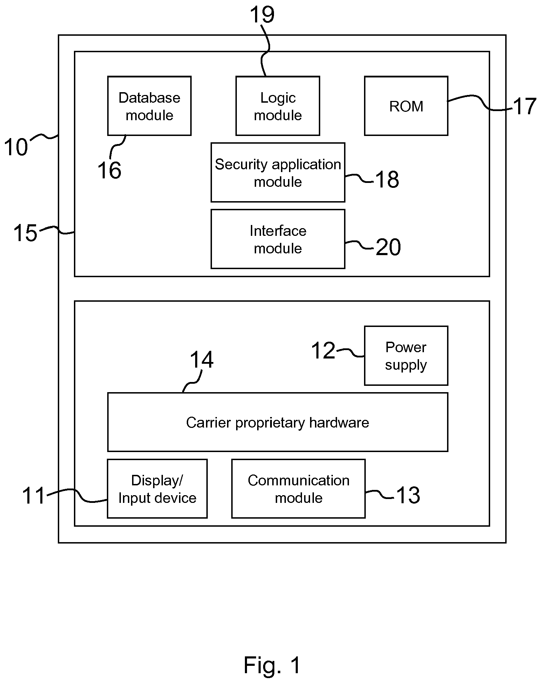

Turning now to Fig. 1, a user unit or user device, i.e. a CashButler host, including an electronic cash handling module, i.e. a CashButler, according to one embodiment of the present invention will be described and discussed. The user unit 10 may be a cellular phone (mobile phone), an MP3 device, a personal digital assistant, an USB memory, a personal computer or laptop, a GPS etc.

The user unit 10 comprises a display/input unit 11 allowing the user to input commands and/or instructions and by which the user can be presented for information related to a electronic cash handling module 15, which will be described below. In case of a cellular phone, the display/input unit 11 comprises the display and the keyboard of the phone. The user unit 10 also includes a power supply 12 supplying the modules, units and circuits of the unit 10 with power, carrier proprietary hardware 14 including logic, and a communication unit 13, which may comprise a near range communication (NRC) circuit, for example, an RFID circuit or a device for infra-red communication. Further, the communication unit 13 may comprise an RF unit. The user unit 10 is connectable to a communication network and may communicate with other entities such as other user units, purchase devices, issuing houses, etc via or within the communication network, which communication network may be GSM ("Global System for Mobile communications"), UMTS ("Universal Mobile Telecommunication System"), a wireless LAN ("Local Area Network") and/or a WAN ("Wide Area Network"), such as the Internet. For a given communication method, a multitude of standard and/or proprietary communication protocols may be used. For example, and without limitation, wireless (e.g. radio frequency pulse coding, spread spectrum frequency hopping, time-hopping etc.) and other communication protocols (e.g. HTTP SMTP, FTP, TCP/IP) may be used. Other proprietary methods and protocols may also be used.

The electronic cash handling module 15 according to one embodiment comprises a database module 16 adapted to store different types of objects. According to this embodiment, the database module is adapted to store Dynamic Checks, electronic receipts, and debit, credit, bonus, and charge card data. Further, the electronic cash handling module 15 comprises a logic module 19 adapted to control operations performed on the database 16, for example, in connection with a payment of a product bought by the user of the user unit 10. The electronic cash handling module 15 also comprises firmware including software code for the logic module 19, which may be stored in a read only memory (ROM) 17 or in a flash memory. In this embodiment, the memory in which the firmware is stored in cannot be re-programmed. Hence, in case of a malfunction, the electronic cash handling module 15 has to be discarded. According to another embodiment, an updating program may be downloaded from, for example, issuing server, which will be described in more detail below, enabling an updating of the firmware stored within the ROM 17.

Moreover, the electronic cash handling module 15 comprises a security application module 18 adapted to verify an authenticity of units being connected to the user unit 10, i.e. to determine whether the logic module 19 allows that a specific required action or operation is executed. For example, at a purchase of a product in a retail store. In such a case, at connection of the user unit 10 to a purchase device located in the retail store, the security application module 18 will check the authenticity of the purchase device. When the authenticity has been verified, an amount of currency in form of Dynamic Checks can be transferred from the connected user unit 10 to the purchase device corresponding to the price of the product. That is, the logic module 19 accepts the transmission of the required amount of currency in form of Dynamic Checks since the connected purchase device has been verified as an authentic purchase device. Similarly, if a user of a first user device wants to transfer an amount of currency to another user of a second user equipment, for example to balance a debt, the user's connect their devices to each other, for example, wirelessly or by means of an RFID interface or an infrared interface. Alternatively, the connection of the device can be made by means of an USB interface. Upon the connection, the transferring user device, i.e. the security application module, will check the authenticity of the receiving user device before the actual transmission of the Dynamic Check will be executed. According to embodiments of the present invention, a transfer between user devices is verified by means of entering a code, for example, a pin code.

Furthermore, the cash handling module 15 also comprises an interface module 20 adapted to communicate with the carrier proprietary hardware 14 of the user device 10.

Below, the Dynamic Checks according to the present invention will be described in more detail. As discussed above, structured data type for Dynamic Checks according to one embodiment of the present invention is defined below (Dynamic CheckType):

- SNCurrencyCode as Long Integer
- CurrencyString as String
- IssuingID as Integer
- SNBase as String

- SNOffset as Long Integer
- Value as Float
- Unit as Integer
- Fraud as Boolean

Now, an example of the handling of a Dynamic Check in connection with a transfer of currency will be discussed. A Dynamic Check including an amount of 5 SEK may be represented in the following manner:

    1004;SEK;123456;20060630100437343346581;0000001;9;5;2

The Dynamic Check may thus latently include the follwoing daughter Dynamic Checks:

| Curr_Code | Curr_Str | BankID | Key | Base |
|---|---|---|---|---|
| 1004 | SEK | 123456 | 20060630100437343346581 | 0000010 |
| 1004 | SEK | 123456 | 20060630100437343346581 | 0000009 |
| 1004 | SEK | 123456 | 20060630100437343346581 | 0000008 |
| 1004 | SEK | 123456 | 20060630100437343346581 | 0000007 |
| 1004 | SEK | 123456 | 20060630100437343346581 | 0000006 |
| 1004 | SEK | 123456 | 20060630100437343346581 | 0000005 |
| 1004 | SEK | 123456 | 20060630100437343346581 | 0000004 |
| 1004 | SEK | 123456 | 20060630100437343346581 | 0000003 |
| 1004 | SEK | 123456 | 20060630100437343346581 | 0000002 |
| 1004 | SEK | 123456 | 20060630100437343346581 | 0000001 |

If the Dynamic Check is used to buy an item or product for an amount of 3 SEK, the following Dynamic Check will be transferred from the user device of the buyer:

    1004;SEK;123456;2006063010043734346581;0000005;5;3;2

which latently comprises the following Dynamic Checks:

    1004 SEK 123456 20060630100437343346581 0000010
    1004 SEK 123456 20060630100437343346581 0000009
    1004 SEK 123456 20060630100437343346581 0000008
    1004 SEK 123456 20060630100437343346581 0000007
    1004 SEK 123456 20060630100437343346581 0000006
    1004 SEK 123456 20060630100437343346581 0000005

The database of the user device, i.e. the database of the cash handling unit of the buying user device, will thus now contain the following Dynamic Check:

    1004;SEK;123456;2006063010043734346581;0000001;3;2;2

which latently comprises the following Dynamic Checks:

    1004 SEK 123456 20060630100437343346581 0000004
    1004 SEK 123456 20060630100437343346581 0000003
    1004 SEK 123456 20060630100437343346581 0000002
    1004 SEK 123456 20060630100437343346581 0000001

Hereinafter, a second example will be discussed. The database of a user device, i.e. the database of the cash handling unit of the buying user device, may contain the following Dynamic Checks:

    1002; USD;123456;20060324173837343346601;0000001;59999;600;100
    1004;SEK; 336611;2006063009543734346581;0000001;3129;1565;2
    1002;USD;654321;20060324173837343346611;0000001;99899;999;100

1004;SEK;336612;20060630100437343465B1 ;0000001 ;9999;5000;2

As can be seen, the database contains 1599 USD ($ 1599) and 6565 SEK. All Dynamic Checks originate from different Issuing banks but can co-exist in the database due to the common syntax.

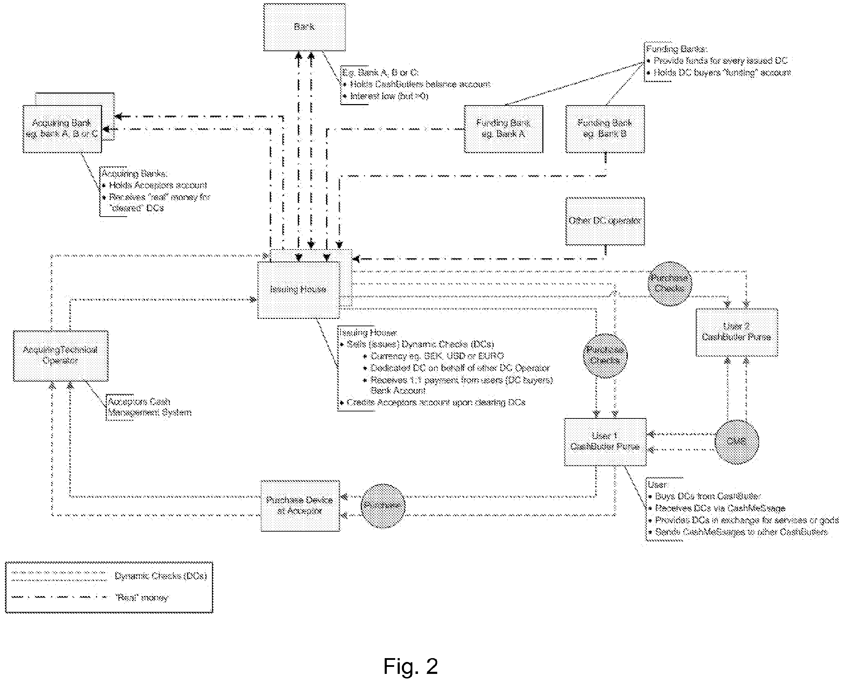

In Fig. 2, an exemplary system environment according to the present invention and an exemplary flow of Dynamic Checks within the system is shown.

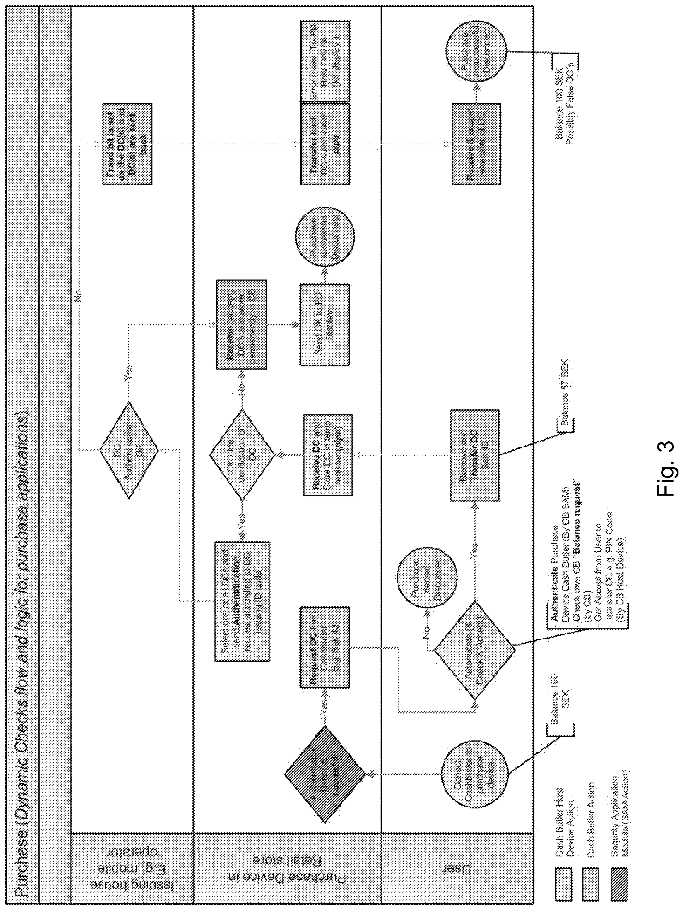

In Fig. 3, a flow diagram showing the Dynamic Check flow and logic for purchase applications is shown. The Request DC from CashButler, Remove and transfer DC, Receive (accept), Fraud Bit is set, Transfer back, and Receive and accept steps are CashButler actions. The Authenticate step is a Security Application Module action. The remaining steps are CashButler Host device actions.

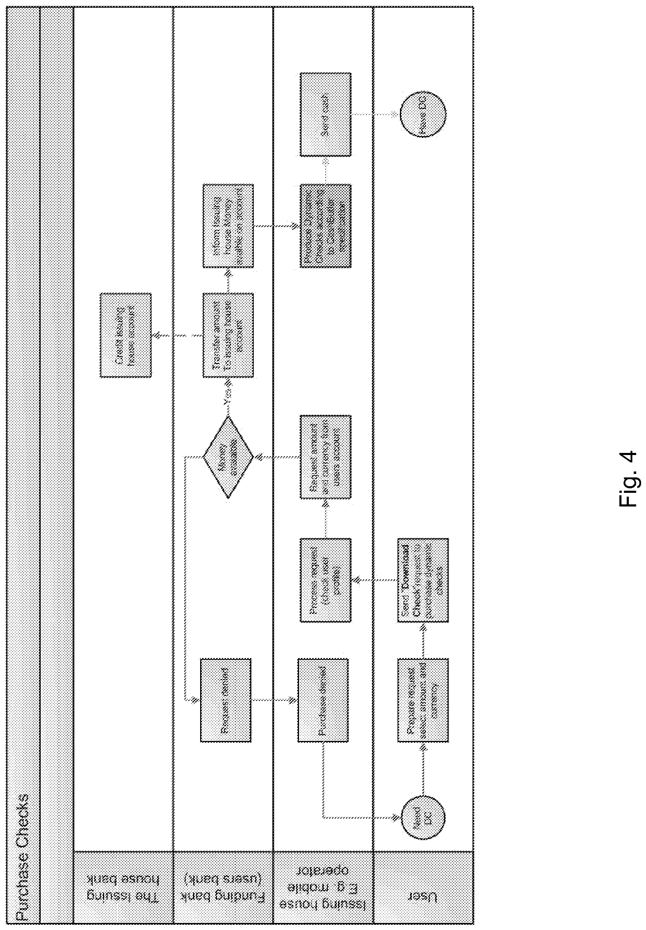

In Fig. 4, a logic flow at a purchase of Dynamic Checks according to the present invention is shown.

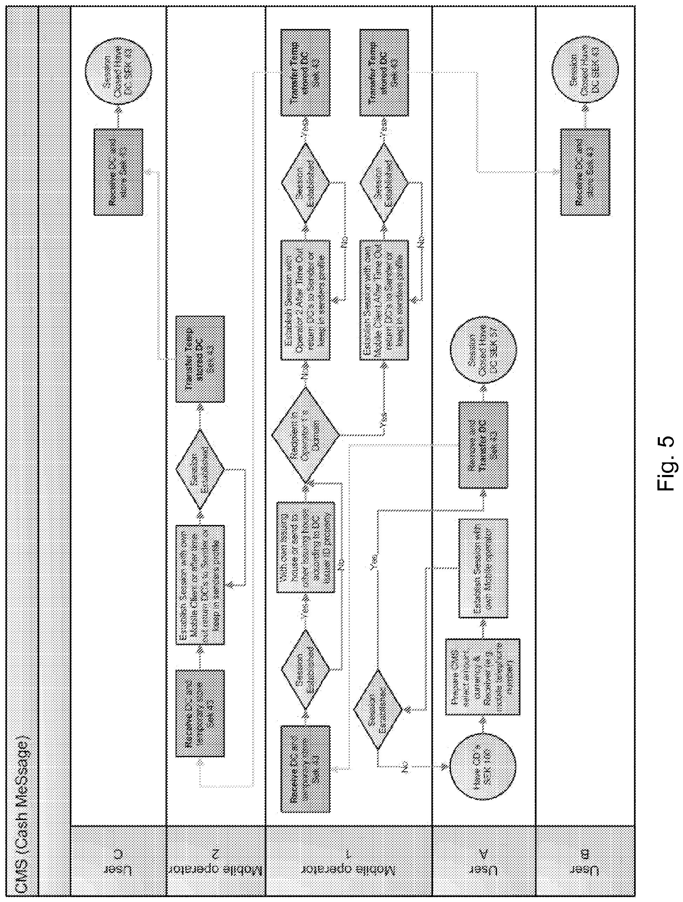

In Fig. 5, the Cash MeSsage (CMS) handling according to the present invention is shown. The Receive DC, and Transfer Temp are CashButler actions.

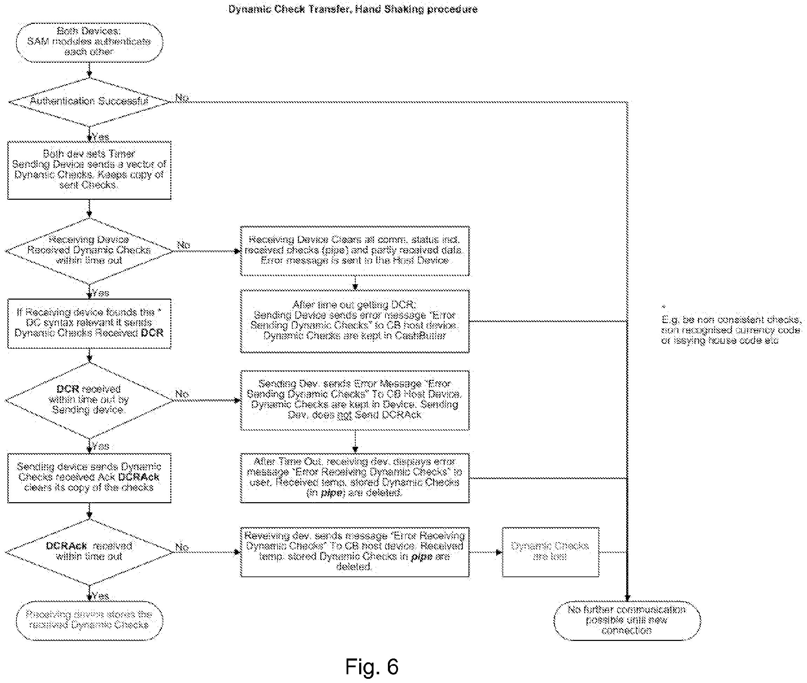

In Fig. 6, the Dynamic Check transfer and hand shaking procedure according to the present invention is shown.

As discussed above, a Cash MeSsage is a message that can be transferred over a wireless communication network such as the GSM or UMTS network similar to an SMS or an MMS. A CMS contains one or more Dynamic Checks. A transfer of Dynamic Checks by means of a cellular phone requires, according to embodiments of the present invention, receipt by entering a password or PIN code. The operator buffers or stores the information before transferring it further on to the intended recipient in order to be able to perform an authenticity check at the Issuing Bank or house, see for example Fig. 2, and to check whether the recipient has implemented the cash handling device (Cash Butler) and thus is able to receive a CMS. If the receiver has not implemented Cash Butler, the message is sent back to the sender.

Although an exemplary embodiment of the present invention has been shown and described, it will be apparent to those having ordinary skill in the art that a number of changes, modifications, or alterations to the inventions as described herein may be made.

Thus, it is to be understood that the above description of the invention and the accompanying drawings is to be regarded as a non-limiting example thereof and that the scope of protection is defined by the appended patent claims.

**Claims**

1. A system for handling electronic currency transactions between user devices and/or entities connectable to said system, comprising:

   a plurality of Dynamic Checks, each Dynamic Check comprising information suitable to verify that the Dynamic Check has been issued by an electronic currency funding entity, information on its value, information on the identity of the Dynamic Check, information on a smallest transferable unit of currency, information on a number of daughter checks being a multiple of said value of the Dynamic Check, said Dynamic Check being dividable into daughter checks each corresponding to said smallest transferable unit of currency;
   at least a first user device connectable to said system, said at least first user device comprising a currency storage area in a data storage medium, wherein said area is adapted to comprise at least one of said Dynamic Checks, a logic module, and a security application module;
   at least a second user device connectable to said system, said at least second user device comprising a currency storage area in a data storage medium, wherein said area is adapted to comprise at least one of said Dynamic Checks, a logic module, and a security application module;
   wherein said security application module of said first user device is adapted to verify an authenticity of said second user device during a transaction session between said first and second user devices;
   wherein said logic module of said first user device is adapted to, if said authenticity is verified, adjusting the current information on a number of daughter checks of a selected Dynamic Check of said currency storage area of said first user device by an information on a number of daughter checks corresponding to a sum to be transmitted; and
   wherein transmitting information representing said sum from the first user device to the second user device via communication modules of said first and second user devices, respectively.

2. A method for handling electronic currency transactions between user devices and/or entities of an electronic currency handling system, comprising:

   providing a plurality of Dynamic Checks, each Dynamic Check comprising information suitable to verify that the Dynamic Check has been issued by an electronic currency funding entity, information on its value, information on the identity of the Dynamic Check, information on a smallest transferable unit of currency, information on a number of daughter checks being a multiple of said value of the Dynamic Check, said Dynamic Check being dividable into daughter checks each corresponding to said smallest transferable unit of currency;

providing a currency storage area in a data storage medium of a first user device, said area being adapted to comprise at least one of said Dynamic Checks;

connecting said first user device to a second user device comprising a currency storage area in a data storage medium of a second identity, said area being adapted to comprise at least one of said Dynamic Checks;

verifying an authenticity of said second user device by checking said authenticity in a security application module in said first user device;

if said authenticity is verified, adjusting the current information on a number of daughter checks of a selected Dynamic Check of said currency storage area of said first user device by an information on a number of daughter checks corresponding to a sum to be transmitted; and

transmitting to said second user device information representing said sum to be transmitted from the first user device to the second user device.

3. A method for transferring information between user devices and/or entities of a system according to claim 1 via a communication network to which the user devices and/or entities are connectable, the method comprising:

creating a cash message including information related to at least one Dynamic Check in a first user device, the at least one Dynamic Check comprising information suitable to verify that the Dynamic Check has been issued by an electronic currency funding entity, information on its value, information on the identity of the Dynamic Check, information on a smallest transferable unit of currency, information on a number of daughter checks being a multiple of said value of the Dynamic Check, said Dynamic Check being dividable into daughter checks each corresponding to said smallest transferable unit of currency;

requesting a transfer of said message;

storing said message in an intermediary storage;

checking whether an intended receiving user device has implemented a cash handling device in said user device;

receiving a code verifying that the intended receiving user device is authorized to receive the message; and

transferring the message to the intended receiving user device via communication modules of the first user device and the intended receiving user device.

## Patentansprüche

1. System zum Umgang mit elektronischen Währungstransaktionen zwischen Benutzervorrichtungen und/oder Einheiten, die mit dem System zu verbinden sind, umfassend:

mehrere Dynamische Schecks, wobei jeder Dynamische Scheck Informationen, die dafür geeignet sind zu verifizieren, dass der Dynamische Scheck von einer Finanzierungseinheit für elektronische Währung ausgestellt worden ist, Informationen über seinen Wert, Informationen über die Identität des Dynamischen Schecks, Informationen über eine kleinste übertragbare Währungseinheit, Informationen über eine Anzahl an Unterschecks umfasst, die ein Vielfaches des Werts des Dynamischen Schecks ist, wobei der Dynamische Scheck in Unterschecks unterteilbar ist, die jeweils der kleinsten übertragbaren Währungseinheit entsprechen;

wenigstens eine erste Benutzervorrichtung, die mit dem System zu verbinden ist, wobei die wenigstens eine erste Benutzervorrichtung einen Währungsspeicherbereich in einem Datenspeichermedium umfasst, wobei der Bereich dafür geeignet ist, wenigstens einen der Dynamischen Schecks, ein Logikmodul und ein Sicherheitsanwendungsmodul zu umfassen;

wenigstens eine zweite Benutzervorrichtung, die mit dem System zu verbinden ist, wobei die wenigstens eine zweite Benutzervorrichtung einen Währungsspeicherbereich in einem Datenspeichermedium umfasst, wobei der Bereich dafür geeignet ist, wenigstens einen der Dynamischen Schecks, ein Logikmodul und ein Sicherheitsanwendungsmodul zu umfassen;

wobei das Sicherheitsanwendungsmodul der ersten Benutzervorrichtung dafür geeignet ist, während einer Transaktionssitzung zwischen der ersten und zweiten Benutzervorrichtung eine Echtheit der zweiten Benutzervorrichtung zu verifizieren;

wobei das Logikmodul der ersten Benutzervorrichtung dafür geeignet ist, wenn die Echtheit verifiziert ist, die aktuellen Informationen über eine Anzahl an Unterschecks eines ausgewählten Dynamischen Schecks des Währungsspeicherbereichs der ersten Benutzervorrichtung durch Informationen über eine Anzahl an Unterschecks anzupassen, die einer zu sendenden Summe entspricht; und

wobei Informationen, welche die Summe repräsentieren, über Kommunikationsmodule der ersten bzw. zweiten Benutzervorrichtung von der ersten Benutzervorrichtung an die zweite Benutzervorrichtung gesendet werden.

2. Verfahren zum Umgang mit elektronischen Währungstransaktionen zwischen Benutzervorrichtungen und/oder Einheiten eines Systems zum Umgang mit elektronischer Währung, umfassend:

Bereitstellen mehrerer Dynamischer Schecks, wobei jeder Dynamische Scheck Informationen, die dafür geeignet sind zu verifizieren, dass der Dynamische Scheck von einer Finanzierungseinheit für elektronische Währung ausgestellt worden ist, Informationen über seinen Wert, Informationen über die Identität des Dynamischen Schecks, Informationen über eine kleinste übertragbare Währungseinheit, Informationen über eine Anzahl an Unterschecks umfasst, die ein Vielfaches des Werts des Dynamischen Schecks ist, wobei der Dynamische Scheck in Unterschecks unterteilbar ist, die jeweils der kleinsten übertragbaren Währungseinheit entsprechen;
Bereitstellen eines Währungsspeicherbereichs in einem Datenspeichermedium, wobei der Bereich dafür geeignet ist, wenigstens einen der Dynamischen Schecks zu umfassen;
Verbinden der ersten Benutzervorrichtung mit einer zweiten Benutzervorrichtung, welche einen Währungsspeicherbereich in einem Datenspeichermedium einer zweiten Identität umfasst, wobei der Bereich dafür geeignet ist, wenigstens einen der Dynamischen Schecks zu umfassen;
Verifizieren einer Echtheit der zweiten Benutzervorrichtung durch Prüfen der Echtheit in einem Sicherheitsanwendungsmodul in der ersten Benutzervorrichtung;
wenn die Echtheit verifiziert ist, Anpassen der aktuellen Informationen über eine Anzahl an Unterschecks eines ausgewählten Dynamischen Schecks des Währungsspeicherbereichs der ersten Benutzervorrichtung durch Informationen über eine Anzahl an Unterschecks, die einer zu sendenden Summe entspricht; und
Senden von Informationen, welche die Summe repräsentieren, die von der ersten Benutzervorrichtung an die zweite Benutzervorrichtung zu senden ist, an die zweite Benutzervorrichtung.

3. Verfahren zum Übertragen von Informationen zwischen Benutzervorrichtungen und/oder Einheiten eines Systems nach Anspruch 1 über ein Kommunikationsnetzwerk, mit welchem die Benutzervorrichtungen und/oder Einheiten zu verbinden sind, wobei das Verfahren umfasst:

Erzeugen einer Kassenmeldung, welche Informationen umfasst, die auf wenigstens einen Dynamische Scheck in einer ersten Benutzervorrichtung bezogen sind, wobei der wenigstens eine Dynamische Scheck Informationen, die dafür geeignet sind zu verifizieren, dass der Dynamische Scheck von einer Finanzierungseinheit für elektronische Währung ausgestellt worden ist, Informationen über seinen Wert, Informationen über die Identität des Dynamischen Schecks, Informationen über eine kleinste übertragbare Währungseinheit, Informationen über eine Anzahl an Unterschecks umfasst, die ein Vielfaches des Werts des Dynamischen Schecks ist, wobei der Dynamische Scheck in Unterschecks unterteilbar ist, die jeweils der kleinsten übertragbaren Währungseinheit entsprechen;
Anfordern einer Übertragung der Meldung;
Speichern der Meldung in einem Zwischenspeicher;
Prüfen, ob eine vorgesehene empfangende Benutzervorrichtung eine Geldumgangsvorrichtung in der Benutzervorrichtung realisiert hat;
Empfangen eines Codes, der verifiziert, dass die vorgesehene empfangende Benutzervorrichtung berechtigt ist, die Meldung zu empfangen; und
Übertragen der Meldung zu der vorgesehenen empfangenden Benutzervorrichtung über Kommunikationsmodule der ersten Benutzervorrichtung und der vorgesehenen empfangenden Benutzervorrichtung.

**Revendications**

1. Système de manipulation de transactions en monnaie électronique entre des dispositifs utilisateurs et/ou des entités susceptibles d'être reliées audit système, comprenant :

une pluralité de Chèques dynamiques, chaque Chèque dynamique comprenant des informations adaptées pour vérifier que le Chèque dynamique a bien été émis par une entité de financement en monnaie électronique, des informations concernant la valeur de celui-ci, des informations concernant l'identité du Chèque dynamique, des informations concernant la plus petite unité monétaire transférable, des informations concernant un nombre de chèques fille équivalant à un multiple de ladite valeur du Chèque dynamique, ledit Chèque dynamique étant divisible en chèques fille correspondant chacun à ladite plus petite unité monétaire transférable ;

au moins un premier dispositif utilisateur apte à être connecté audit système, ledit au moins un premier dispositif utilisateur comprenant une zone de stockage de monnaie dans un support de stockage de données, ladite zone étant adaptée pour inclure au moins l'un desdits Chèques dynamiques, un module logique, et un module d'application de sécurité ;

au moins un deuxième dispositif utilisateur apte à être connecté audit système, ledit au moins un deuxième dispositif utilisateur comprenant une zone de stockage de monnaie dans un support de stockage de données, ladite zone étant adaptée pour inclure au moins l'un desdits Chèques dynamiques, un module logique, et un module d'application de sécurité ;

dans lequel ledit module d'application de sécurité dudit premier dispositif utilisateur est adapté pour vérifier l'authenticité dudit deuxième dispositif utilisateur pendant une session de transaction entre lesdits premier et deuxième dispositifs utilisateurs ;

dans lequel, ledit module logique dudit premier dispositif utilisateur est adapté pour ajuster l'information actuelle concernant un nombre de chèques fille d'un Chèque dynamique sélectionné de ladite zone de stockage de monnaie dudit premier dispositif utilisateur, si ladite authenticité est vérifiée, en fonction d'une information concernant un nombre de chèques fille correspondant à une somme à transférer ; et

dans lequel est prévue une transmission d'informations représentant ladite somme, du premier dispositif utilisateur au deuxième dispositif utilisateur, par le biais de modules de communication desdits premier et deuxième dispositifs utilisateurs, respectivement.

2. Procédé de manipulation de transactions en monnaie électronique entre des dispositifs utilisateurs et/ou des entités d'un système de manipulation de transactions en monnaie électronique, comprenant :

la mise à disposition d'une pluralité de Chèques dynamiques, chaque Chèque dynamique comprenant des informations adaptées pour vérifier que le Chèque dynamique a bien été émis par une entité de financement en monnaie électronique, des informations concernant la valeur de celui-ci, des informations concernant l'identité du Chèque dynamique, des informations concernant la plus petite unité monétaire transférable, des informations concernant un nombre de chèques fille équivalant à un multiple de ladite valeur du Chèque dynamique, ledit Chèque dynamique étant divisible en chèques fille correspondant chacun à ladite plus petite unité monétaire transférable ;

la mise à disposition d'une zone de stockage de monnaie dans un support de stockage de données d'un premier dispositif utilisateur, ladite zone étant adaptée pour inclure au moins l'un desdits Chèques dynamiques ;

le raccordement dudit premier dispositif utilisateur à un deuxième dispositif utilisateur comprenant une zone de stockage de monnaie dans un support de stockage de données, ladite zone étant adaptée pour inclure au moins l'un desdits Chèques dynamiques ;

la vérification d'une authenticité dudit deuxième dispositif utilisateur en vérifiant ladite authenticité dans un module d'application de sécurité dans ledit dispositif utilisateur ;

si l'authenticité est vérifiée, l'ajustement de l'information actuelle concernant un nombre de chèques fille d'un Chèque dynamique sélectionné de ladite zone de stockage de monnaie dudit premier dispositif utilisateur en fonction d'une information concernant un nombre de chèques fille correspondant à une somme à transférer ; et

la transmission, audit deuxième dispositif utilisateur, d'informations représentant ladite somme à transférer dudit premier dispositif utilisateur au deuxième dispositif utilisateur.

3. Procédé de transmission d'informations entre des dispositifs utilisateurs et/ou des entités d'un système selon la revendication 1, par le biais d'un réseau de communication auquel les dispositifs utilisateurs et/ou entités peuvent se connecter, le procédé comprenant :

la création d'un message de monnaie comprenant des informations relatives à au moins un Chèque dynamique dans un premier dispositif utilisateur, l'eau moins un Chèque dynamique comprenant des informations adaptées pour vérifier que le Chèque dynamique a bien été émis par une entité de financement en monnaie électronique, des informations concernant la valeur de celui-ci, des informations concernant l'identité du Chèque dynamique, des informations concernant la plus petite unité monétaire transférable, des informations concernant un nombre de chèques fille équivalant à un multiple de ladite valeur du Chèque dynamique, ledit Chèque dynamique étant divisible en chèques fille correspondant chacun à ladite plus petite unité monétaire transférable ;

la demande de transfert dudit message ;

le stockage dudit message dans une mémoire intermédiaire ;

la vérification de la mise en place d'un dispositif de manipulation de monnaie par un dispositif utilisateur destinataire prévu dans ledit dispositif utilisateur ;

la réception d'un code attestant que le dispositif utilisateur destinataire prévu est habilité à recevoir le message ;

et

le transfert du message audit dispositif utilisateur destinataire prévu par le biais de modules de communication du premier dispositif utilisateur et du dispositif utilisateur destinataire prévu.

Fig. 1

Fig. 2

Fig. 3

Fig. 4

Fig. 5

Dynamic Check Transfer, Hand Shaking procedure

Both Devices: SAM modules authenticate each other

Authentication Successful — No

Yes

Both dev sets Timer. Sending Device sends a vector of Dynamic Checks. Keeps copy of sent Checks.

Receiving Device Received Dynamic Checks within time out — No → Receiving Device Clears all comm. status incl. received checks (pipe) and partly received data. Error message is sent to the Host Device.

Yes

If Receiving device founds the * DC syntax relevant it sends Dynamic Checks Received DCR

After time out getting DCR: Sending Device sends error message "Error Sending Dynamic Checks" to CB host device. Dynamic Checks are kept in CashButler

DCR received within time out by Sending device. — No → Sending Dev. sends Error Message "Error Sending Dynamic Checks" To CB Host Device. Dynamic Checks are kept in Device. Sending Dev. does not Send DCRAck

Yes

Sending device sends Dynamic Checks received Ack DCRAck clears its copy of the checks

After Time Out, receiving dev. displays error message "Error Receiving Dynamic Checks" to user. Received temp. stored Dynamic Checks (in pipe) are deleted.

DCRAck received within time out — No → Reveiving dev. sends message "Error Receiving Dynamic Checks" To CB host device. Received temp. stored Dynamic Checks in pipe are deleted. → Dynamic Checks are lost

Yes

Receiving device stores the received Dynamic Checks

No further communication possible until new connection

* E.g. be non consistent checks, non recognised currency code or issying house code etc

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9844429 A
- WO 0223497 A
- EP 1727102 A
- EP 0784282 A2